# EUROPEAN PATENT APPLICATION

(11) **EP 4 769 069 A1**
(43) Date of publication of application: **01.07.2026**
(21) Application number: 25227668.8
(22) Date of filing: 30.12.2025
(51) Int. Cl.: G06F 1/26, G06F 1/3206

(54) **MICROCONTROLLER-BASED POWER CONTROL WITH FEEDBACK LOOPS**

(30) Priority: 30.12.2024 US 202419005553
(71) Applicant: Google LLC, Mountain View, CA 94043 (US)
(72) Inventor: Ravindran, Ashwini, Mountain View, 94043 (US); Wang, Qiong, Mountain View, 94043 (US); Gan, Houle, Mountain View, 94043 (US); Eltoukhy, Ali, Mountain View, 94043 (US); Korn, Arthur Joachim, Mountain View, 94043 (US)
(74) Representative: Betten & Resch

(57) **Abstract**

The present application relates to systems and methods for regulating power for one or more electronic devices. In accordance with aspects of the disclosure, one or more micro-controllers are configured to regulate both peak and average power being consumed by devices within the system. The power being consumed within the system can be determined over different durations of time and multiple independent feedback loops may be used to regulate power within the system. In addition, the system can include a feedback loop that is configured to allow the system to enter into a low-power mode.

## Description

### BACKGROUND

Thermal design power (TDP) of an electronic system relates to the amount of power consumption for which a power supply unit needs to provide components within the system. As part of TDP control, computing systems can have their power consumption regulated based on thermal, electrical, or other physical limitations. However, the current mechanisms of TDP control for high-power computing devices are inflexible and are not able to address varying system conditions and requirements.

### BRIEF SUMMARY

The present disclosure relates to systems and methods for regulating power for one or more electronic devices. In accordance with aspects of the disclosure, a micro-controller unit is configured to regulate both peak and average power being consumed by devices within the system. The power being consumed within the system can be determined over different durations of time and multiple independent feedback loops may be used to regulate power within the system. In accordance with an aspect of the disclosure, the system can include a feedback loop that is configured to allow the system to enter into a low-power mode

In accordance with aspects of the disclosure, a method of power regulation may include: receiving input indicative of power usage for one or more components; determining first power-usage values associated with a first span of time and second power-usage values associated with a second span of time; providing the first power-usage values to a first control loop that performs a comparison with a first reference-power set point and the second power-usage values to a second control loop that performs a comparison with a second reference-power set point; and transmitting a power-control signal for regulating power usage by the one or more components so as to produce power usage that is within the first reference-power set point and the second reference-power set point. In addition, the first control loop and the second control loop may be part of a programmable integrated-circuit.

In accordance with other aspects of the disclosure, power usage values may be controlled by more than two control loops. For example, power usage values may be provided to three control loops, each of which are used to regulate power usage.

In accordance with other aspects of the disclosure, the first reference-power set point and the second reference-power set point may be provided by a programmable controller.

In accordance with still other aspects of the disclosure, the first power-usage values may be output by a first filter and the second power-usage values are output by a second filter. For example, the first filter may produce power-usage values in accordance with a first span of time that is between 1ms and 100ms and the second filter may produce power-usage values in accordance with a second span of time that is 1s or more.

In accordance with yet other aspects of the disclosure, the first control loop and the second control loop may act as proportional-integral-derivative (PID) controllers.

In accordance with other aspects of the disclosure, the power-control signal that is sent to control power consumption is at least one of a pulse-width modulation output and a serial peripheral interface output.

In accordance with still other aspects of the disclosure, the method may include performing an arbitration between outputs of the first control loop and the second control loop.

In accordance with yet other aspects of the disclosure, the one or more components comprise a plurality of ASICs that are configured to receive input based on the power-control signal.

In accordance with yet other aspects of the disclosure, the method may further include: identifying one or more system conditions for which a lower-power mode is to be implemented; and transferring control of power from the first control loop and the second control loop to a lower-power control loop.

In accordance with other aspects of the disclosure, a system for power regulation may include: one or more computing devices; a programmable integrated-circuit that is configured to: receive input indicative of power usage for one or more computing devices; determine first power-usage values associated with a first span of time and second power-usage values associated with a second span of time; provide the first power-usage values to a first control loop that performs a comparison with a first reference-power set point and the second power-usage values to a second control loop that performs a comparison with a second reference-power set point; and transmit a power-control signal for regulating power usage by the one or more computing devices so as to produce power usage that is within the first reference-power set point and the second reference-power set point.

In accordance with still other aspects of the disclosure, the first control loop and the second control loop may be configured to operate independently of one another.

In accordance with yet other aspects of the disclosure, the system is configured so that the first reference-power set point and the second reference-power set point are provided by a programmable controller. In addition, the first power-usage values are output by a first filter and the second power-usage values are output by a second filter. The first span of time may be, for example, less than 1s, while the second span of time is at least 1s.

In accordance with yet other aspects of the disclosure, the system is configured so that the first control loop and the second control loop act as proportional-integral-derivative (PID) controllers.

In accordance with aspects of the disclosure, the system is configured to output power signals that are at least one of a pulse-width modulation output and a serial peripheral interface output.

In accordance with yet other aspects of the disclosure, the system may include an arbitration regulator configured to provide an output based on the first control loop and the second control loop.

In accordance with still other aspects of the disclosure, the one or more computing devices comprise a plurality of ASICs that are configured to receive input corresponding to the power signal.

In accordance with yet other aspects of the disclosure, the programmable integrated-circuit is further configured to: identify one or more system conditions for which low-power mode is to be implemented; and transfer control of power from the first control loop and the second control loop to a low-power control loop.

### BRIEF DESCRIPTION OF THE DRAWINGS

Figure 1 is a block diagram of a system for regulating power to a plurality of computing devices in accordance with aspects of the disclosure.
Figure 2 is a block diagram of a system including multiple control loops for regulating power in accordance with aspects of the disclosure.
Figure 3 is a block diagram of a system configured to operate in a low-power mode in accordance with aspects of the disclosure.
Figure 4 is a block diagram of a system configured for a single PID loop to operate as two or more control loops.

### DETAILED DESCRIPTION

The technology relates to systems and methods for regulating power for one or more electronic devices. The system may use one or more micro-controllers to regulate power to system components based on both peak and average power that is being consumed by the system. The power being consumed within the system can be determined over different durations of time and can be regulated based on multiple independent feedback loops.

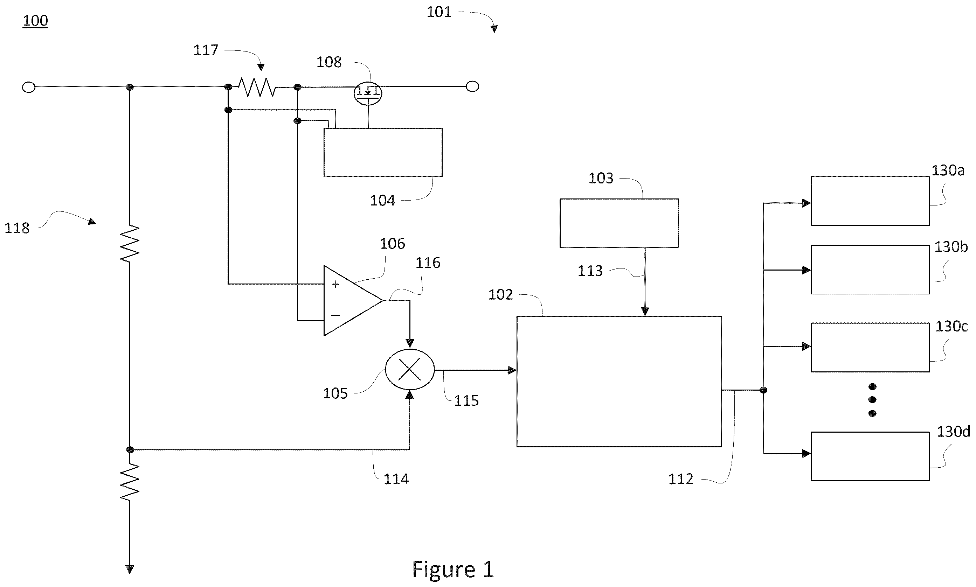

Figure 1 is a block diagram 100 of a system 101 in accordance with aspects of the disclosure. System 101 may be configured to act as a programmable power-control in connection with thermal design power (TDP) for one or more devices. For example, system 101 contains a plurality of high-performance ASICs 130a-d, which may be part of a server, a tray, or a rack of computing devices. While the rack with ASICs 130a-d are in operation, they will consume power, and system 101 can be implemented to regulate this power consumption in accordance with desired system conditions, such as energy usage, processing needs, and thermal conditions.

System 101 may include circuitry 118 to receive inputs relating to the voltage and current that are being provided to the rack of ASICs 130a-d. For example, a current sense resistor 117 can be used with current sense amplifier 106 or a hotswap to provide a current input 116 that corresponds to the electrical current being provided to ASICs 130a-d. The current input 116 and a voltage input 114 can be provided to a multiplier 105 that is configured to convert the current input 116 and voltage input 114 to a power-measurement output that can be transmitted over path 115. The power-measurement output corresponds to the amount of power being consumed by ASICs 130a-d. The current input 116 and voltage input 114 can each be analog inputs that are combined by multiplier 105 so as to create an analog power-measurement output. The power-measurement output may also be digitized in accordance with aspects of the disclosure.

The power-measurement output of multiplier 105 may be provided to a power-distribution integrated circuit (IC) 102 via path 115, and power-distribution IC 102 may be configured to determine whether the power consumed by ASICs 130a-d is within a set of thresholds. These thresholds can be programmable and may be provided to power-distribution IC 102 by a controller 103, which may take the form of a baseboard management controller (BMC). If power consumption by ASICs 130a-d is determined to be beyond one or more power thresholds provided by controller 103, power-distribution IC 102 may provide power-control signals to ASICs 130a-d via output 112. The power-control signals may take one or more forms, such as being pulse-width modulation (PWM) signals or of the form of serial peripheral interface (SPI) signals. The power-control signals may also take the form of software commands that are used in connection with setting a register to modify the power usage. The power-control signals can be modulated by power-distribution IC 102 so as to throttle power that is being consumed by ASIC 130a-d.

System 101 may also include a switch 108 and hotswap controller 104, which may be configured to control whether system 101 is in a power-distribution mode in which power-distribution IC 102 is providing power-control signals to ASIC 130a-d. For example, hotswap controller 104 may control switch 108 so as to bypass signals being provided to multiplier 105 and power-distribution IC 102 when the system is not currently operating in a mode for which power-distribution control is needed.

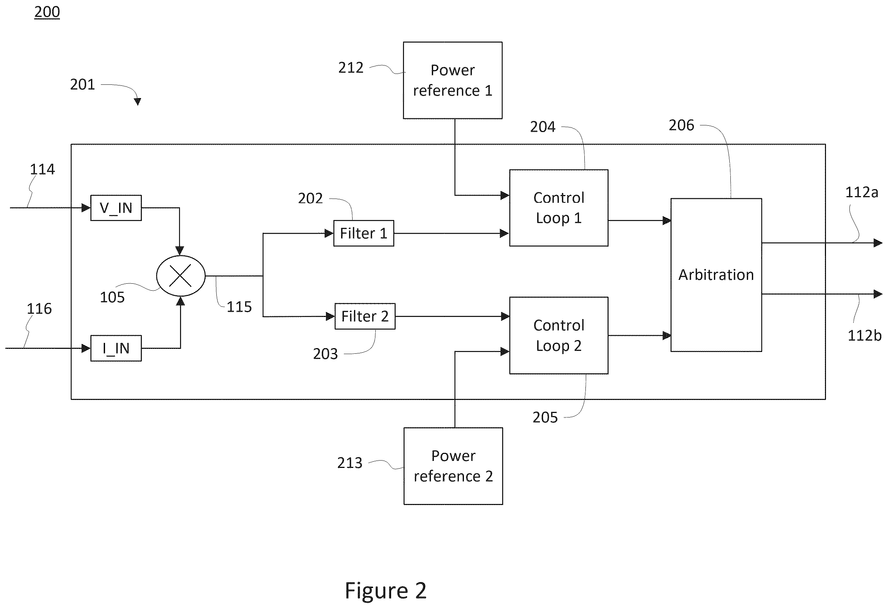

In accordance with aspects of the disclosure, power-distribution IC102 may be configured to apply multiple programmable thresholds to determine whether power is to be throttled to ASICs 130a-d. For example, Figure 2 is block diagram 200 of a system 201 in which two control loops 204 and 205 are used to determine the appropriate power-control signals that are to be provided to one or more ASICs or other devices (not shown). As described above, multiplier 105 of system 201 may be configured to determine a power measurement of the system based on a current input 114 and a voltage input 116.

The power measurement may be provided over path 115 to two different filters 202 and 203. Each filter may be configured to identify power usage over a different span of time. For example, filter 202 may be configured so as to determine power usage over a period of 10ms, while filter 203 is configured to determine power usage over a period of 1s. The span of time for which filters 202 and 203 determine the power usage of the system may be set to values so that one filter 202 identifies spikes in power usage, while the other filter 203 identifies some sustained period of power usage. In addition, filters 202 and 203 may be programmable, so as to allow for adjustments to the span of time for which power usage is determined by each filter 202 and 203. The adjustments to filters 202 and 203 may be provided using registers that are programmed via a controller, such as BMC controller 103 shown in Figure 1.

Returning to diagram 200 of Figure 2, the output of filter 202 may be provided to control loop 204, while the output of filter 203 may be provided to control loop 205. Control loops 204 and 205 may take the form of regulation controller, such as a proportional-integral-derivative (PID) controller, which receives the filtered power-measurement output of one of the filters 202 and 203 and determines whether the PID loop for the filtered power-measurement output is within a power reference value. Control loops 204 and 205 can be independently set from one another, so as to create two programmable feedback loops that are each used to control the power being consumed by the system. For example, control loop 204 is configured to receive the filtered power-measurement output of filter 202 and to receive a programmable power reference value 212 from a BMC controller. Within control loop 204, the output of filter 202 is provided to a PID loop that compares the filtered power values against the power reference value 212. Similarly, control loop 205 is configured to receive the filtered power-measurement output of filter 203 and to receive a programmable power reference value 213, so as to compare the filtered power values of filter 203 against power reference value 213. In addition, the integrated circuitry of system 201 may be configured to implement a form of integrator anti-windup control for each control loop 204 and 205.

An arbitration regulator 206 may be configured to receive the output of control loops 204 and 205 and regulate power within the system so that each control loop 204 and 205 registers filtered power values that are within reference power thresholds. Each control loop 204 and 205 can be configured to be stable and independent of one another, however arbitration regulator 206 may throttle power to the system based on either control loop 204 or 205 identifying that power values are not within the current reference power thresholds. For example, arbitration regulator 206 provides two outputs 112a and 112b. Output 112a may take the form of a PWM signal in which the duty cycle of devices within the system are controlled until the measured power of the system is regulated to be below the reference power in both control loops 204 and 205. Output 112b may take the form of an SPI signal that is similarly configured to regulate the power within the system so that the measured power of the system. The PWM output 112a and SPI output 112b may be alternatively or selectively provided to devices within the system based on the particular operating requirements of devices within the system.

The duty cycles for controlling power may have programmable minimum and maximum limits. For example, devices within the system may have overall maximum and minimum power limits that can be incorporated into the signals for outputs 112a and 112b.

As described herein, filter 202 may be configured to filter the measured power values based on a relatively short span of time, such as 1ms, while filter 203 may be configured to filter the measured power values over a longer period of time, such as 1s or more. In this instance, control loop 204 may be provided a power reference value 212 that corresponds to acceptable power levels in response to brief surges in power, while control loop 205 may be provided a different power reference value 213 that corresponds to acceptable power levels over an extended period of time.

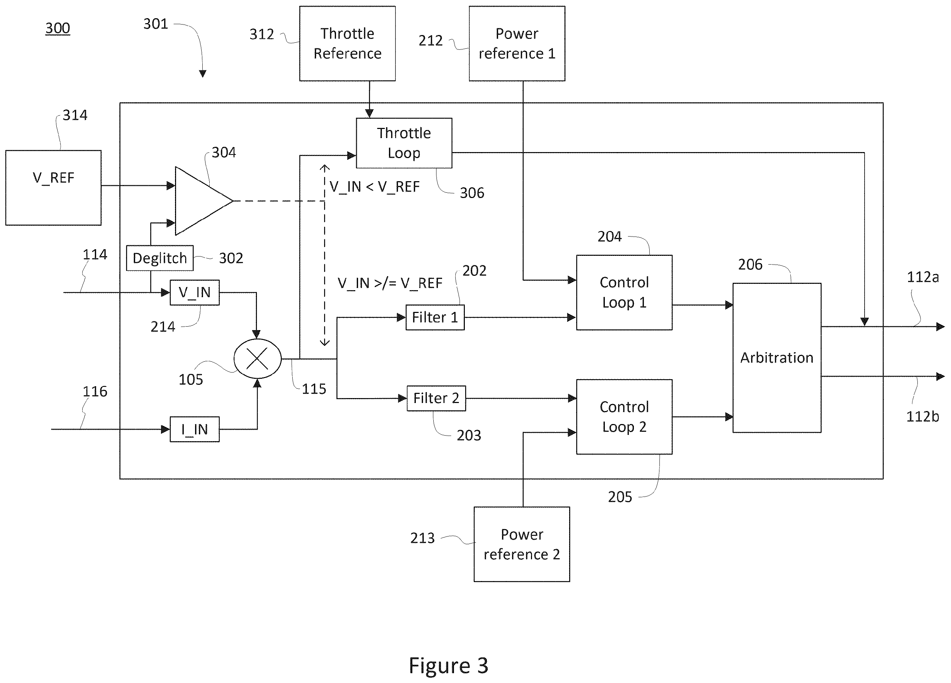

In accordance with aspects of the disclosure, the power-regulation system may be configured to operate under different power modes based on one or more system conditions. For example, Figure 3 is a block diagram 300 in which system 301 is configured to switch between a standard mode and a low-power mode based on identification of changes to the input voltage. Under the standard mode, system 301 may use control loops 204, 205, and arbitration regulator 206 to regulate power to devices within the system in a manner similar to that described in connection with block diagram 200. However, system 301 may also enter into a low-power mode based on an analysis of one or more inputs 114 and 116. For example, system 301 contains deglitch filter 302, voltage comparator 304, and throttle control loop 306. These components can be implemented so as to place system 301 so as to provide devices within the system power signals that are in accordance with a low-power mode. For example, voltage input 114 may be provided to voltage comparator 304 after it has been subjected to deglitch filter 302, which can be configured to remove very brief changes in voltage, such as those of less than 2ms. The voltage comparator 304 is configured to compare the input voltage with a low-power reference voltage 314.

If it is determined that the voltage input 114 is lower than reference voltage 314, then system 301 can perform power control operations based on throttle control loop 306. Throttle control loop 306 receives a low-power reference value 312, which may be set by a BMC controller. The low-power reference value 312 is set to a different reference power value than control loops 204 and 205. For example, throttle control loop 306 may be provided a low-power reference value 312 that is set to a level that allows the system to operate off of battery power or off of some other backup power source for an extended period of time. The system may also be configured so that the power provided to devices within the system is maintained at the low-power reference value 312 for some period of time prior to the system switching back to providing power based on control loops 204 and 205. For example, the system may operate with a two-minute latch so that the voltage at input 114 must be maintained over reference voltage 314 for a period of two minutes before the system switches out of low-power mode and allows power to be controlled based on the output of control loops 204 and 205.

In accordance with aspects of the disclosure, system 301 may be configured so that the low-power mode is selectively disabled. In addition, all reference values can be provided by a BMC and may be programmatically adjustable. For example each reference value 212, 213, 312, and 314 of block diagram 300 may be independently adjusted in accordance with system requirements or conditions. Filter values are also independently adjustable, so as to allow for filtered output of differing spans of time in accordance with system requirements or conditions. For example, the system may contain one or more devices that are particularly susceptible to power spikes of even a relatively short duration. Accordingly, one of the filters 202 and 203 may be programmed to average the measured power over a very short period of time, so as to allow the corresponding control loop 204 or 205 to quickly identify power spikes within the filtered power values. The low-power mode disclosed in connection with Figure 3 may alternatively or additionally include identification of other conditions within the circuit that cause the system to transition to the low-power mode. In addition, systems disclosed herein may transition to an alternative mode other than a low-power mode, such as by transitioning to a higher-power mode or to a mode in which some other alternative power source is used.

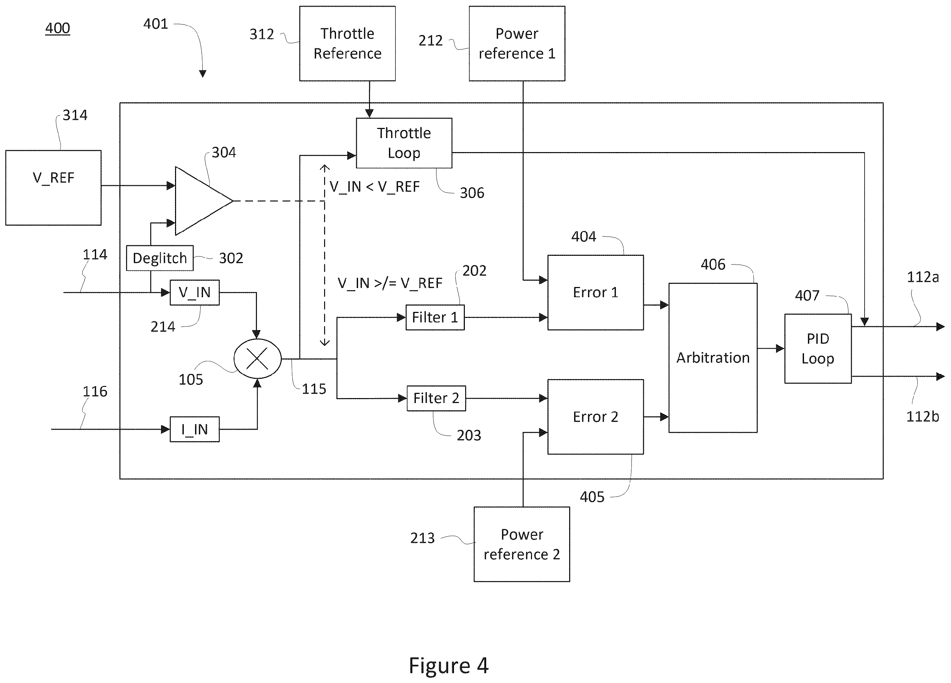

Figure 4 is a a block diagram 400 of system 401 in which a single PID loop 407 is used to perform the operations of two control loops. For example, the output of filter 202 may be provided to an error detector 404 that is configured to identify if the output of filter 202 is above power reference value 212, while output of filter 203 may be provided to an error detector 405 that is configured to identify if the output of filter 203 is above power reference value 213. Arbitrator 406 is configured to identify whether error detector 404 or error detector 405 has provided an output indicating that the filtered power measurement values are over the power reference values 212 and 213, respectively. If so, arbitrator 406 can provide an output to PID loop 407 that will result in PID loop 407 reducing the power that is to be consumed in accordance with power-control signals 112a and 112b. This reduction of power will continue until both error detectors 404 and 405 no longer identify filtered power measurement values above power reference values 212 and 213, respectively. Accordingly, system 401 may implement a single PID loop 407 in connection with performing the operations of two control loops.

Returning to Figure 1, devices 130a-d may be part of a computing tray, and the output 112 may be used to perform power regulation at a tray level, so that all devices 130a-d within a given tray are regulated in the same manner by a given output 112. As discussed herein the output 112 may take the form of a PWM or SPI signal. For a PWM signal, the power regulation may be based on the width of a pulse within the PWM signal, so that a longer pulse allows each device 130a-d to consume a greater amount of power relative to a shorter pulse width. In accordance with aspects of the disclosure, the system may be configured to provide pulse widths between a minimum and a maximum width, so as to regulate the devices between a minimum and maximum amount of power consumption. The system may also be configured so as to provide different PWM signals to one or more of the devices 130a-d. For example, some devices may have different operational requirements that allow for differing amounts of power consumption. The integrated circuit 102 can be programmed so that the output 112 is provided in accordance with the operational requirements of each device 130a-d within the system.

Unless otherwise stated, the foregoing alternative examples are not mutually exclusive but may be implemented in various combinations to achieve unique advantages. As these and other variations and combinations of the features discussed above can be utilized without departing from the subject matter defined by the claims, the foregoing description of the embodiments should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples; rather, the examples are intended to illustrate only one of many possible embodiments. Further, the same reference numbers in different drawings can identify the same or similar elements.

## Claims

1. A method of power regulation comprising:
receiving input indicative of power usage for one or more components;
determining first power-usage values associated with a first span of time and second power-usage values associated with a second span of time;
providing the first power-usage values to a first control loop that performs a comparison with a first reference-power set point and the second power-usage values to a second control loop that performs a comparison with a second reference-power set point; and
transmitting a power signal for regulating power usage by the one or more components so as to produce power usage that is within the first reference-power set point and the second reference-power set point.

2. The method of claim 1, wherein the first control loop and the second control loop are part of a programmable integrated-circuit.

3. The method of claim 2, wherein the first reference-power set point and the second reference-power set point are provided by a programmable controller.

4. The method of any one of claims 1 to 3, wherein the first power-usage values are output by a first filter and the second power-usage values are output by a second filter.

5. The method of any one of claims 1 to 4, wherein the first span of time is less than 1s s and the second span of time is at least 1s; and/or
wherein the first control loop and the second control loop act as proportional-integral-derivative (PID) controllers; and/or
wherein the power signal is at least one of a pulse-width modulation output and a serial peripheral interface output.

6. The method of any one of claims 1 to 5, further comprising performing an arbitration between outputs of the first control loop and the second control loop.

7. The method of any one of claims 1 to 6, wherein the one or more components comprise a plurality of ASICs that are configured to receive input based on the power signal.

8. The method of any one of claims 1 to 7, further comprising:
identifying one or more system conditions for which low-power mode is to be implemented; and
transferring control of power from the first control loop and the second control loop to a low-power control loop.

9. A system for power regulation comprising:
one or more computing devices;
a programmable integrated-circuit that is configured to:
receive input indicative of power usage for one or more computing devices;
determine first power-usage values associated with a first span of time and second power-usage values associated with a second span of time;
provide the first power-usage values to a first control loop that performs a comparison with a first reference-power set point and the second power-usage values to a second control loop that performs a comparison with a second reference-power set point; and
transmit a power signal for regulating power usage by the one or more computing devices so as to produce power usage that is within the first reference-power set point and the second reference-power set point.

10. The system of claim 9, wherein the first control loop and the second control loop are independent of one another.

11. The system of claim 9 or claim 10, wherein the first reference-power set point and the second reference-power set point are provided by a programmable controller.

12. The system of any one of claims 9 to 11, wherein the first power-usage values are output by a first filter and the second power-usage values are output by a second filter; and/or
wherein the first span of time is between 1ms and 100ms and the second span of time is at least 1s; and/or
wherein the first control loop and the second control loop act as proportional-integral-derivative (PID) controllers, and/or
wherein the power signal is at least one of a pulse-width modulation output and a serial peripheral interface output.

13. The system of any one of claims 9 to 12, further comprising an arbitration regulator configured to provide an output based on the first control loop and the second control loop.

14. The system of any one of claims 9 to 13, wherein the one or more computing devices comprise a plurality of ASICs that are configured to receive input corresponding to the power signal.

15. The system of any one of claims 9 to 14, wherein the programmable integrated-circuit is further configured to:
identify one or more system conditions for which low-power mode is to be implemented; and
transfer control of power from the first control loop and the second control loop to a low-power control loop.
